# EUROPEAN PATENT SPECIFICATION

(11) **EP 4 232 947 B1**
(45) Date of publication and mention of the grant of the patent: **28.10.2026**
(21) Application number: 20833827.7
(22) Date of filing: 17.12.2020
(51) Int. Cl.: G06F 18/2413, G06V 20/56

(54) **APPARATUS AND METHOD FOR MULTI-DOMAIN MULTIMODAL IMAGE TRANSLATION**
VORRICHTUNG UND VERFAHREN ZUR MULTIMODALEN BILDÜBERSETZUNG MIT MEHREREN DOMÄNEN
APPAREIL ET PROCÉDÉ POUR UNE TRANSLATION D'IMAGE MULTIMODALE MULTIDOMAINE

(43) Date of publication of application: 30.08.2023
(73) Proprietor: Huawei Technologies Co., Ltd., Shenzhen, Guangdong 518129 (CN)
(72) Inventor: URFALIOGLU, Onay, 80992 Munich (DE); SHEN, Fengyi, 80992 Munich (DE)
(74) Representative: Gill Jennings & Every LLP
(86) International application number: PCT/EP2020/086746
(87) International publication number: WO 2022/128096

(56) References cited:
- YAHUI LIU ET AL: "Describe What to Change: A Text-guided Unsupervised Image-to-Image Translation Approach", ARXIV.ORG, CORNELL UNIVERSITY LIBRARY, 201 OLIN LIBRARY CORNELL UNIVERSITY ITHACA, NY 14853, 10 August 2020 (2020-08-10), XP081736227
- ZHENG ZHILIN ET AL: "Disentangling Latent Space for VAE by Label Relevant/Irrelevant Dimensions", 2019 IEEE/CVF CONFERENCE ON COMPUTER VISION AND PATTERN RECOGNITION (CVPR), IEEE, 15 June 2019 (2019-06-15), pages 12184 - 12193, XP033686819, DOI: 10.1109/CVPR.2019.01247
- YAHUI LIU ET AL: "GMM-UNIT: Unsupervised Multi-Domain and Multi-Modal Image-to-Image Translation via Attribute Gaussian Mixture Modeling", ARXIV.ORG, CORNELL UNIVERSITY LIBRARY, 201 OLIN LIBRARY CORNELL UNIVERSITY ITHACA, NY 14853, 15 March 2020 (2020-03-15), XP081621691

## Description

### TECHNICAL FIELD

The present disclosure relates to image processing in general. More specifically, the disclosure relates to an image processing apparatus and a method for multi-domain multimodal image translation.

### BACKGROUND

Image-to-image translation is a well-established research field in computer vision, which helps to augment image datasets and, moreover, shows great potential in image editing. Large image data sets are collected, for instance, in applications for autonomous driving. In an exemplary autonomous driving scenario, a plurality of labelled clear weather day-time images, i.e. images with varying image content, but from the same image domain (sometimes also referred to as image style) may be collected by an autonomous vehicle for training an object detection model assisting the autonomous driving. For enabling this object detection model to work well also in more challenging conditions, such as foggy, rainy and night-time conditions, i.e. image domains, it would be necessary to have labelled images for these more challenging conditions as well.

YAHUI LIU ET AL: "Describe What to Change: A Text-guided Unsupervised Image-to-Image Translation Approach" describes disentangling the image content from the visual attributes, and describes modifying the latter using the textual description, before generating a new image from the content and the modified attribute representation.

ZHENG ZHILIN ET AL: "Disentangling Latent Space for VAE by Label Relevant/Irrelevant Dimensions" describes method for disentangling the latent space into the label relevant and irrelevant dimensions, zs and zu, for a single input.

### SUMMARY

The present invention is defined by the features disclosed in the independent claims. Additional embodiments are defined in the dependent claims. It is an object of the invention to provide an improved apparatus and method for multi-domain multimodal image translation.

The foregoing and other objects are achieved by the subject matter of the independent claims. Further implementation forms are apparent from the dependent claims, the description and the figures.

According to a first aspect, an image processing apparatus for generating an output image based on an input image is provided.

The image processing apparatus according to the first aspect is configured to generate a content feature map that is indicative of an image content of the input image and a style feature vector that is indicative of an image domain (sometimes also referred to as image style) of the input image. Moreover, the image processing apparatus is configured to determine the image domain as one image domain of a plurality of image domains based on the style feature vector.

The image processing apparatus is further configured to generate the output image based on the content feature map of the input image and a further style feature vector associated with, i.e. belonging to a further image domain of the plurality of image domains.

For instance, in an autonomous driving scenario, the image processing apparatus according to the first aspect allows translating training images from a day-time image domain to other weather and/or lighting conditions. Doing so, the image processing apparatus allows obtaining various output images at the same location, i.e. with the same content and reuse the same label to fine-tune an object detection model, which is not even possible by sending a second test drive along the same road. Training all the mixed data together, the robustness of an object detection model can be eventually improved. Advantageously, the image processing apparatus according to the first aspect allows performing multi-domain multimodal image-to-image translations with a reduced space complexity compared to conventional approaches.

The image processing apparatus comprises a first encoder neural network configured to generate the content feature map that is indicative of the image content of the input image.

The image processing apparatus comprises a second encoder neural network configured to generate the style feature vector that is indicative of the image domain of the input image.

In a further possible implementation form of the first aspect, the image processing apparatus is configured to determine the image domain of the plurality of image domains based on the style feature vector using a Gaussian mixture model.

In a further possible implementation form of the first aspect, each of the plurality of image domains is associated with one Gaussian of the Gaussian mixture model.

In a further possible implementation form of the first aspect, the image processing apparatus is configured to generate a plurality of output images based on the input image. More specifically, the image processing apparatus is configured to generate a first output image based on the content feature map of the input image and a first further style feature vector associated with a first further image domain of the plurality of image domains and to generate a second output image based on the content feature map of the input image and a second further style feature vector associated with a second further image domain of the plurality of image domains.

The image processing apparatus comprises a content discriminator neural network, wherein the content discriminator neural network is configured, in a training phase, to filter, i.e. discard the content feature map, if the content feature map contains information related to the image domain of the input image.

The image processing apparatus comprises a generator neural network configured to generate the output image based on the content feature map of the input image and the further style feature vector associated with the further image domain of the plurality of image domains.

In a further possible implementation form of the first aspect, the image processing apparatus comprises a first encoder neural network configured to generate the content feature map that is indicative of the image content of the input image and a second encoder neural network configured to generate the style feature vector that is indicative of the image domain of the input image, wherein, in the training phase, the image processing apparatus is further configured to train the generator neural network by feeding the output image back to the first encoder neural network and the second encoder neural network for obtaining a reconstructed input image and by minimizing a difference (i.e. the reconstruction losses) between the input image and the reconstructed input image.

In a further possible implementation form of the first aspect, the image processing apparatus further comprises a multi-scale discriminator neural network, wherein, in the training phase, the multi-scale discriminator neural network is configured to determine feedback information based on the output image and to provide the feedback information to the generator neural network for training the generator neural network, wherein the feedback information comprises information on whether the output image belongs to the further image domain of the plurality of image domains and/or whether the output image appears like a real image in the further image domain of the plurality of image domains.

In a further possible implementation form of the first aspect, the multi-scale discriminator neural network comprises a plurality of average pooling layers for down-sampling the output image to a plurality of down-sampled output images having different image resolutions.

In a further possible implementation form of the first aspect, the image processing apparatus comprises a further neural network configured to determine the image domain of the plurality of image domains associated with the style feature vector.

According to a second aspect an image processing method for generating an output image based on an input image is provided. The image processing method comprises the steps of:
generating a content feature map that is indicative of an image content of the input image;
generating a style feature vector that is indicative of an image domain of the input image;
determining an image domain of a plurality of images domains based on the style feature vector; and
generating the output image based on the content feature map of the input image and a further style feature vector associated with a further image domain of the plurality of image domains.

The image processing method according to the second aspect of the present disclosure can be performed by the image processing apparatus according to the first aspect of the present disclosure. Thus, further features of the image processing method according to the second aspect of the present disclosure result directly from the functionality of the image processing apparatus according to the first aspect of the present disclosure as well as its different implementation forms described above and below.

According to a third aspect a computer program product is provided, comprising program code which causes a computer or a processor to perform the image processing method according to the second aspect, when the program code is executed by the computer or the processor.

Details of one or more embodiments are set forth in the accompanying drawings and the description below. Other features, objects, and advantages will be apparent from the description, drawings, and claims.

### BRIEF DESCRIPTION OF THE DRAWINGS

In the following embodiments of the invention are described in more detail with reference to the attached figures and drawings, in which:
Figure 1 is a schematic diagram illustrating an image processing apparatus for multi-domain multimodal image generation according to an embodiment;
Figure 2 is a schematic diagram illustrating further details of the image processing apparatus for multi-domain multimodal image generation of figure 1; and
Figure 3 is a flow diagram illustrating an image processing method for multi-domain multimodal image generation according to an embodiment.

In the following identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

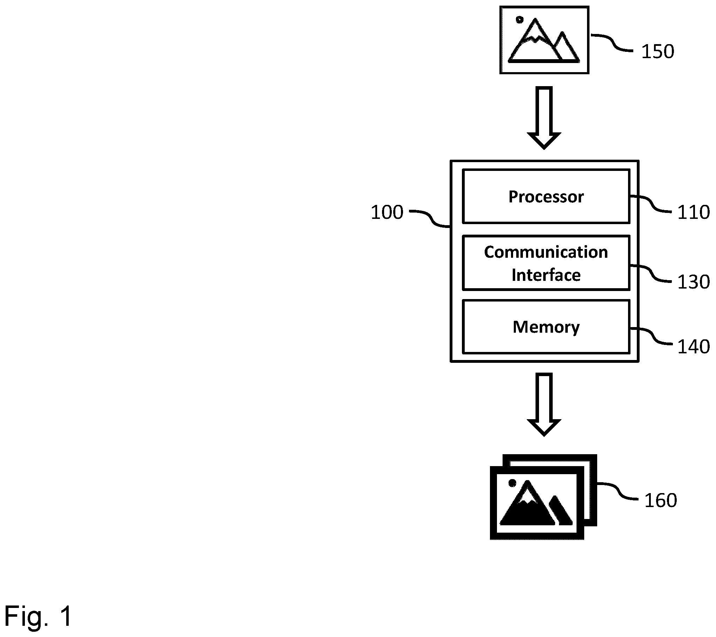

Figure 1 is a schematic diagram illustrating an image processing apparatus 100 for multi-domain multimodal image generation according to an embodiment. As will be described in more detail below, the image processing apparatus 100 is configured to generate one or more output images 160 based on an input image 150, wherein the input image 150 has an image content and is associated with an image domain of a plurality of image domains, i.e. has an image style.

As illustrated in figure 1, the imaging processing apparatus 100 may comprise a processor or processing circuitry 110 for processing image data, in particular the input image 150 for generating the one or more output images 160. As will be described in more detail below, the processor 110 may implement or operate one or more neural networks for generating the one or more output images 160 based on the input image 150. The processor 110 may be implemented in hardware and/or software, which when executed causes the apparatus 100 to perform the functions and methods described herein. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors. Moreover, the image processing apparatus 100 may comprise a communication interface 130, such as a wireless communication interface 130 as well as an electronic memory 140 for storing data, in particular the input image 150 and/or the one or more output images 160. In an embodiment, the image processing apparatus 100 may further comprise an image capturing device, such as one or more cameras for capturing the input image 150.

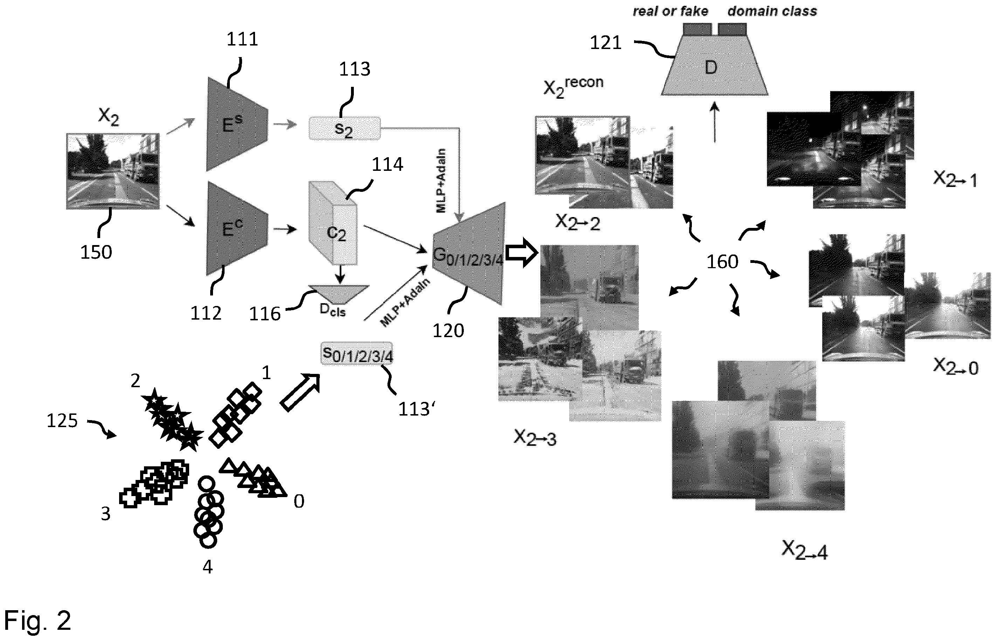

As will be described in more detail in the following under further reference to figure 2, which shows several processing blocks implemented by the image processing apparatus 100 according to an embodiment, in particular its processing circuitry 110, the image processing apparatus 100 is configured to generate based on the input image 150 a content feature map 114 that is indicative of an image content of the input image 150. In the embodiment shown in figure 2, the processing circuitry 110 of the image processing apparatus 100 is configured to implement a first encoder neural network 112 configured to generate the content feature map 114 that is indicative of the image content of the input image 150. In an embodiment, the image content of the input image 150 may be, for instance, the image content of a driving scenario image, such as other cars, street contours and the like.

The image processing apparatus 100 is further configured to generate based on the input image 150 a style feature vector 113 that is indicative of an image domain (or image style) of the input image 150. In the embodiment shown in figure 2, the image processing apparatus 100 is configured to implement a second encoder neural network 111 configured to generate the style feature vector 113 that is indicative of the image domain of the input image 150. In an embodiment, the style feature vector 113 of the input image 150 may be, for instance, indicative of a day-time image domain, a night-time image domain, a sunny image domain, a snow image domain, a foggy image domain and the like.

The image processing apparatus 100 is further configured to determine based on the style feature vector 113 an image domain of a plurality of possible image domains 125. In other words, the image processing apparatus 100 is configured to select based on the style feature vector 113 the most appropriate image domain of a set comprising the plurality of image domains 125. In an embodiment, the image processing apparatus 100 is configured to implement a neural network configured to determine the image domain of the plurality of image domains 125 associated with the style feature vector 113 of the input image 150. In an embodiment, the image processing apparatus 100 is configured to determine the image domain of the plurality of image domains 125 associated with the style feature vector 113 of the input image 150 using a Gaussian mixture model for modeling the distribution of style feature vectors, such as the style feature vector 113 over the plurality of image domains 125. In an embodiment, each of the plurality of image domains 125 may be associated with one Gaussian of the Gaussian mixture model 125.

The image processing apparatus 100 is further configured to generate the one or more output images 160 based on the content feature map 114 of the input image 150 and a further style feature vector 113' associated with a further image domain of the plurality of image domains 125. In the embodiment shown in figure 2, the image processing apparatus 100 is configured to implement a generator neural network 120 configured to generate the plurality of output images 160 based on the content feature map 114 of the input image 150 and the further style feature vector 113' associated with the further image domain of the plurality of image domains 125 modelled using the Gaussian mixture model. Thus, in an embodiment, the image processing apparatus 100 is configured to generate a first output image 160 based on the content feature map 114 of the input image 150 and a first style feature vector 113' associated with an image domain of the plurality of image domains 125 and to generate a second output image 160 based on the same content feature map 114 of the input image 150 and a further style feature vector 113' associated with a different image domain of the plurality of image domains 125.

As described above and illustrated in figure 2, the image processing apparatus 100 is configured to split the input image 150 being associated with one of the plurality of image domains 125 modelled by the Gaussian mixture model (by way of example, in figure 2 the input image 150 is associated with a sunny day-time image domain) into its style feature vector 113 and a content feature map 114 using two separate encoders 111, 112. In an embodiment, the one or more neural networks implemented by the processing circuitry 110 of the image processing apparatus 100 may be trained in a training phase to map style feature vectors, such as the style feature vector 113 associated with the input image 150, into the Gaussian mixture model, wherein each Gaussian in the Gaussian mixture model may stand for one of the plurality image domains 125. Advantageously, for a fixed content feature map 114, sampling style feature vectors from different Gaussians can lead to diverse output images in multiple image domains, while reducing space complexity. For training this model, each folder of the dataset may contain one domain of images. The whole dataset contains multiple domains of images as desired. For instance, in the embodiment shown in figure 2, the image processing apparatus 100 has been trained with training images from 5 different image domains "0", "1", "2", "3" and "4" (as shown by the different symbols as used for illustrating the distribution of the trained style feature vectors over the plurality of image domains).

In an embodiment, the image processing apparatus 100 in a training phase is configured, like in the execution phase, to split the input image 150 into its style feature vector 113 using the style encoder neural network 111 and its content feature map 114 using the content encoder neural network 112. In an embodiment, the image processing apparatus 100 is configured, in the training phase, to feed the same style feature vector 113 and the content feature map to the generator neural network 120 for adapting, i.e. training the generator neural network 120 to reconstruct the input image 150. Furthermore, feeding the reconstructed input image 150 back to the style encoder neural network 111 and the content encoder neural network 112 allows adapting, i.e. training the style encoder neural network 113 and the content encoder neural network 112 by minimizing the difference between the style feature vector 113 of the original input image 150 and the style feature vector of the reconstructed input image and by minimizing the difference between the content feature map 114 of the original input image 150 and the content feature map of the reconstructed input image.

As already described above, for generating output images from different image domains than the input image 150 the image processing apparatus 100 is configured to replace the style feature vector 113 of the input image 150 (provided by the style encoder neural network 111) with one or more style feature vectors 113' associated with different image domains from the plurality of image domains 125 than the style feature vector 113 of the input image 150 and to feed the content feature map 114 of the input image 150 (provided by the content encoder neural network 112) together with a respective style feature vector 113' associated with a different image domain to the generator neural network 120. For instance, in the exemplary embodiment shown in figure 2, the input image 150 (more specifically, its style feature vector 113) may be associated with the image domain "sunny, day-time image" (referred to as image domain "2" in figure 2). As illustrated in figure 2, by using the same content feature map 114, but style feature vectors 113' associated with different image domains, e.g. the image domains "0", "1", "3" and "4" illustrated in figure 2, the image processing apparatus 100 may translate the sunny, day-time input image 150, for instance, into a foggy, snowy, rainy or night-time output image 160 having the same image content.

In an embodiment, the generator neural network 120 is configured, in the training phase, to feed the one or more output images 160 back to the style encoder neural network 111 and the content encoder neural network 112. By doing so, the image processing apparatus 100 may be trained to reconstruct the same content feature map 114 and the respective style feature vector 113, 113' used for the respective output image 160. This forces the style encoder neural network 111 to map the style feature vectors 113, 113' into the Gaussian mixture model for modelling the distribution of the style feature vectors 113, 113' over the plurality of image domains 125.

As illustrated in figure 2, in an embodiment, the image processing apparatus 100 may further comprise a multi-scale discriminator neural network 121. In the training phase, the multi-scale discriminator neural network 121 is configured to determine feedback information based on the output images 160 and to provide the feedback information to the generator neural network 120 for training the generator neural network 120. In an embodiment, the feedback information comprises information on whether the one or more output images 160 belong to one of the plurality of image domains 125 modelled using the Gaussian mixture model and/or whether the one or more output images 160 look realistic or not in the corresponding image domain. In an embodiment, the multi-scale discriminator neural network 121 comprises a plurality of average pooling layers for down-sampling the one or more output images 160 to a plurality of down-sampled output images having different image resolutions. Thus, the multi-scale discriminator 121 not only allows discriminating the realism of the output images 160, e.g. whether it is real or fake, but also judging their image domain labelling. Thereby, advantageously, it is possible to encourage that the generator neural network 120 gradually learns to "fool" the multi-scale discriminator 121 by making it unable to tell whether the output is real or fake and which image domain it belongs to.

In order to remove the domain specific information, the image processing apparatus 100 may further comprise a content discriminator neural network 116, which is configured, in the training phase, to filter, i.e. discard a respective content feature map 114, if the content feature map contains not only content information, but also information related to the image domain of the respective training input image 150. In other words, the content discriminator neural network 116 may ensure that the respective content feature maps 114 are domain independent, leaving all the domain related information to the style feature vectors 113, 113'.

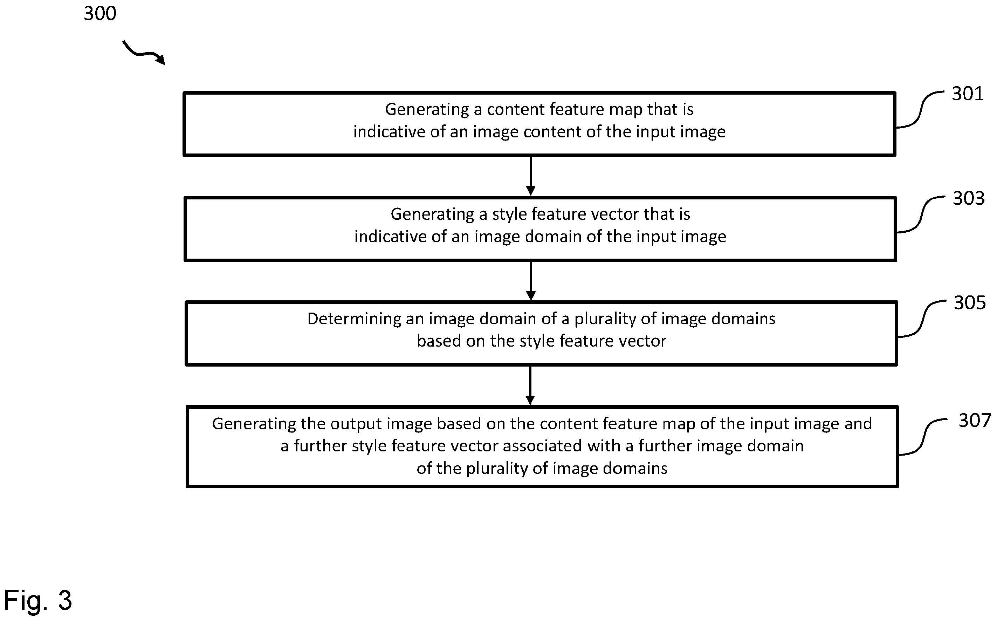

Figure 3 is a flow diagram illustrating an image processing method 300 for multi-domain multimodal image generation according to an embodiment. In an embodiment, the image processing method 300 may be performed by the image processing apparatus 100 described above.

The image processing method 300 comprises a step of generating 301 a content feature map 114 that is indicative of an image content of the input image 150.

Moreover, the image processing method 300 comprises a further step of generating 303 a style feature vector 113 that is indicative of an image domain of the input image 150.

The image processing method 300 comprises a further step of determining 305 an image domain of a plurality of image domains 125 based on the style feature vector 113.

Moreover, the image processing method 300 comprises a further step of generating 307 the output image 160 based on the content feature map 114 of the input image 150 and a further style feature vector 113' associated with a further image domain of the plurality of image domains 125.

The person skilled in the art will understand that the "blocks" ("units") of the various figures (method and apparatus) represent or describe functionalities of embodiments of the invention (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. An image processing apparatus (100) for generating an output image (160) based on an input image (150), wherein the image processing apparatus (100) is configured to:
generate a content feature map (114) that is indicative of an image content of the input image (150), wherein the image processing apparatus (100) comprises a first encoder neural network (112) configured to generate the content feature map (114) that is indicative of the image content of the input image (150);
generate a style feature vector (113) that is indicative of an image domain of the input image (150), wherein the image processing apparatus (100) comprises a second encoder neural network (111) configured to generate the style feature vector (113) that is indicative of the image domain of the input image (150);
determine an image domain of a plurality of image domains (125) based on the style feature vector (113); and
generate the output image (160) based on the content feature map (114) of the input image (150) and a further style feature vector (113') associated with a further image domain of the plurality of image domains (125),
wherein the image processing apparatus (100) comprises a generator neural network (120) configured to generate the output image (160) based on the content feature map (114) of the input image (150) and the further style feature vector (113') associated with the further image domain of the plurality of image domains (125), and
wherein the generator neural network (120) is configured, in the training phase, to feed the output image (160) back to the first encoder neural network (112) and the second encoder neural network (111) for training the image processing apparatus (100) to reconstruct the same content feature map (114) and the respective style feature vectors (113, 113') used for the respective output image (160),
wherein the image processing apparatus (100) comprises a content discriminator neural network (116), wherein the content discriminator neural network (116) is configured, in a training phase, to discard the content feature map (114), if the content feature map (114) contains information related to the image domain of the input image (150).

2. The image processing apparatus (100) of any one of the preceding claims, wherein the image processing apparatus (100) is configured to determine the image domain of the plurality of image domains (125) based on the style feature vector (113) using a Gaussian mixture model (125).

3. The image processing apparatus (100) of claim 2, wherein each of the plurality of image domains (125) is associated with one Gaussian of the Gaussian mixture model (125).

4. The image processing apparatus (100) of any one of the preceding claims, wherein the image processing apparatus (100) is configured to generate a first output image (160) based on the content feature map (114) of the input image (150) and a first further style feature vector (113') associated with a first further image domain of the plurality of image domains (125) and a second output image (160) based on the content feature map (114) of the input image (150) and a second further style feature vector (113') associated with a second further image domain of the plurality of image domains (125).

5. The image processing apparatus (100) of claim 1, wherein the image processing apparatus (100) further comprises a multi-scale discriminator neural network (121), wherein, in a training phase, the multi-scale discriminator neural network (121) is configured to determine feedback information based on the output image (160) and to provide the feedback information to the generator neural network (120) for training the generator neural network (120), wherein the feedback information comprises information on whether the output image (160) belongs to the further image domain of the plurality of image domains (125).

6. The image processing apparatus (100) of claim 5, wherein the multi-scale discriminator neural network (121) comprises a plurality of average pooling layers for down-sampling the output image (160) to a plurality of down-sampled output images having different image resolutions.

7. The image processing apparatus (100) of any one of the preceding claims, wherein the image processing apparatus (100) comprises a neural network configured to determine the image domain of the plurality of image domains (125) associated with the style feature vector (113).

8. An image processing method (300) for generating an output image (160) based on an input image (150), wherein the image processing method (300) comprises:
generating (301) a content feature map (114) that is indicative of an image content of the input image (150), wherein the content feature map (114) that is indicative of the image content of the input image (150) is generated by a first encoder neural network (112);
generating (303) a style feature vector (113) that is indicative of an image domain of the input image (150), wherein the style feature vector (113) is generated by a second encoder neural network (111);
determining (305) an image domain of a plurality of image domains (125) based on the style feature vector (113); and
generating (307) the output image (160) based on the content feature map (114) of the input image (150) and a further style feature vector (113') associated with a further image domain of the plurality of image domains (125), wherein the output image (160) is generated by a generator neural network (120),
wherein the generator neural network (120) is configured, in the training phase, to feed the output image (160) back to the first encoder neural network (112) and the second encoder neural network (111) for training the image processing apparatus (100) to reconstruct the same content feature map (114) and the respective style feature vectors (113, 113') used for the respective output image (160),
wherein the method further comprises discarding, by a content discriminator neural network (116) in a training phase, the content feature map (114) if the content feature map (114) contains information related to the image domain of the input image (150).

9. A computer program comprising program code which, when executed by a computer, causes the computer to perform the method of claim 8.

10. A computer program product comprising a non-transitory computer-readable storage medium for storing program code which causes a computer or a processor to perform the method (300) of claim 8, when the program code is executed by the computer or the processor.

## Patentansprüche

1. Bildverarbeitungsvorrichtung (100) zum Erzeugen eines Ausgabebildes (160) basierend auf einem Eingabebild (150), wobei die Bildverarbeitungsvorrichtung (100) zu Folgendem ausgelegt ist:
Erzeugen einer Inhaltsmerkmalskarte (114), die einen Bildinhalt des Eingabebildes (150) angibt, wobei die Bildverarbeitungsvorrichtung (100) ein erstes neuronales Codierernetzwerk (112) umfasst, das dazu ausgelegt ist, die Inhaltsmerkmalskarte (114) zu erzeugen, die den Bildinhalt des Eingabebildes (150) angibt;
Erzeugen eines Stilmerkmalsvektors (113), der eine Bilddomäne des Eingabebildes (150) angibt, wobei die Bildverarbeitungsvorrichtung (100) ein zweites neuronales Codierernetzwerk (111) umfasst, das dazu ausgelegt ist, den Stilmerkmalsvektor (113) zu erzeugen, der die Bilddomäne des Eingabebildes (150) angibt;
Bestimmen einer Bilddomäne mehrerer Bilddomänen (125) basierend auf dem Stilmerkmalsvektor (113); und
Erzeugen des Ausgabebildes (160) basierend auf der Inhaltsmerkmalskarte (114) des Eingabebildes (150) und einem weiteren Stilmerkmalsvektor (113'), der einer weiteren Bilddomäne der mehreren Bilddomänen (125) zugeordnet ist,
wobei die Bildverarbeitungsvorrichtung (100) ein neuronales Generatornetzwerk (120) umfasst, das dazu ausgelegt ist, das Ausgabebild (160) basierend auf der Inhaltsmerkmalskarte (114) des Eingabebildes (150) und dem weiteren Stilmerkmalsvektor (113'), der der weiteren Bilddomäne der mehreren Bilddomänen (125) zugeordnet ist, zu erzeugen, und
wobei das neuronale Generatornetzwerk (120) dazu ausgelegt ist, in der Trainingsphase das Ausgabebild (160) an das erste neuronale Codierernetzwerk (112) und das zweite neuronale Codierernetzwerk (111) zurückzuführen, um die Bildverarbeitungsvorrichtung (100) darauf zu trainieren, dieselbe Inhaltsmerkmalskarte (114) und die jeweiligen Stilmerkmalsvektoren (113, 113') zu rekonstruieren, die für das jeweilige Ausgabebild (160) verwendet wurden,
wobei die Bildverarbeitungsvorrichtung (100) ein neuronales Inhaltsdiskriminatornetzwerk (116) umfasst, wobei das neuronale Inhaltsdiskriminatornetzwerk (116) in einer Trainingsphase dazu ausgelegt ist, die Inhaltsmerkmalskarte (114) zu verwerfen, falls die Inhaltsmerkmalskarte (114) Informationen enthält, die sich auf die Bilddomäne des Eingabebildes (150) beziehen.

2. Bildverarbeitungsvorrichtung (100) nach einem der vorhergehenden Ansprüche, wobei die Bildverarbeitungsvorrichtung (100) dazu ausgelegt ist, die Bilddomäne der mehreren Bilddomänen (125) basierend auf dem Stilmerkmalsvektor (113) unter Verwendung eines gaußschen Mischmodells (125) zu bestimmen.

3. Bildverarbeitungsvorrichtung (100) nach Anspruch 2, wobei jede der mehreren Bilddomänen (125) einer Gauß-Verteilung des gaußschen Mischmodells (125) zugeordnet ist.

4. Bildverarbeitungsvorrichtung (100) nach einem der vorhergehenden Ansprüche, wobei die Bildverarbeitungsvorrichtung (100) dazu ausgelegt ist, ein erstes Ausgabebild (160) basierend auf der Inhaltsmerkmalskarte (114) des Eingabebildes (150) und einem ersten weiteren Stilmerkmalsvektor (113'), der einer ersten weiteren Bilddomäne der mehreren Bilddomänen (125) zugeordnet ist, und ein zweites Ausgabebild (160) basierend auf der Inhaltsmerkmalskarte (114) des Eingabebildes (150) und einem zweiten weiteren Stilmerkmalsvektor (113'), der einer zweiten weiteren Bilddomäne der mehreren Bilddomänen (125) zugeordnet ist, zu erzeugen.

5. Bildverarbeitungsvorrichtung (100) nach Anspruch 1, wobei die Bildverarbeitungsvorrichtung (100) ferner ein neuronales Mehrskalen-Diskriminatornetzwerk (121) umfasst, wobei das neuronale Mehrskalen-Diskriminatornetzwerk (121) in einer Trainingsphase dazu ausgelegt ist, Rückkopplungsinformationen basierend auf dem Ausgabebild (160) zu bestimmen und die Rückkopplungsinformationen dem neuronalen Generatornetzwerk (120) zum Trainieren des neuronalen Generatornetzwerks (120) bereitzustellen, wobei die Rückkopplungsinformationen Informationen darüber umfassen, ob das Ausgabebild (160) zu der weiteren Bilddomäne der mehreren Bilddomänen (125) gehört.

6. Bildverarbeitungsvorrichtung (100) nach Anspruch 5, wobei das neuronale Mehrskalen-Diskriminatornetzwerk (121) mehrere Mittelwert-Pooling-Schichten zum Herunterabtasten des Ausgabebildes (160) zu mehreren herunterabgetasteten Ausgabebildern mit unterschiedlichen Bildauflösungen umfasst.

7. Bildverarbeitungsvorrichtung (100) nach einem der vorhergehenden Ansprüche, wobei die Bildverarbeitungsvorrichtung (100) ein neuronales Netzwerk umfasst, das dazu ausgelegt ist, die dem Stilmerkmalsvektor (113) zugeordnete Bilddomäne der mehreren Bilddomänen (125) zu bestimmen.

8. Bildverarbeitungsverfahren (300) zum Erzeugen eines Ausgabebildes (160) basierend auf einem Eingabebild (150), wobei das Bildverarbeitungsverfahren (300) Folgendes umfasst:
Erzeugen (301) einer Inhaltsmerkmalskarte (114), die einen Bildinhalt des Eingabebildes (150) angibt, wobei die Inhaltsmerkmalskarte (114), die den Bildinhalt des Eingabebildes (150) angibt, durch ein erstes neuronales Codierernetzwerk (112) erzeugt wird;
Erzeugen (303) eines Stilmerkmalsvektors (113), der eine Bilddomäne des Eingabebildes (150) angibt, wobei der Stilmerkmalsvektor (113) durch ein zweites neuronales Codierernetzwerk (111) erzeugt wird;
Bestimmen (305) einer Bilddomäne mehrerer Bilddomänen (125) basierend auf dem Stilmerkmalsvektor (113); und
Erzeugen (307) des Ausgabebildes (160) basierend auf der Inhaltsmerkmalskarte (114) des Eingabebildes (150) und einem weiteren Stilmerkmalsvektor (113'), der einer weiteren Bilddomäne der mehreren Bilddomänen (125) zugeordnet ist, wobei das Ausgabebild (160) durch ein neuronales Generatornetzwerk (120) erzeugt wird,
wobei das neuronale Generatornetzwerk (120) dazu ausgelegt ist, in der Trainingsphase das Ausgabebild (160) an das erste neuronale Codierernetzwerk (112) und das zweite neuronale Codierernetzwerk (111) zurückzuführen, um die Bildverarbeitungsvorrichtung (100) darauf zu trainieren, dieselbe Inhaltsmerkmalskarte (114) und die jeweiligen Stilmerkmalsvektoren (113, 113') zu rekonstruieren, die für das jeweilige Ausgabebild (160) verwendet wurden,
wobei das Verfahren ferner das Verwerfen der Inhaltsmerkmalskarte (114) durch ein neuronales Inhaltsdiskriminatornetzwerk (116) in einer Trainingsphase umfasst, falls die Inhaltsmerkmalskarte (114) Informationen enthält, die sich auf die Bilddomäne des Eingabebildes (150) beziehen.

9. Computerprogramm, umfassend Programmcode, der bei Ausführung durch einen Computer bewirkt, dass der Computer das Verfahren nach Anspruch 8 ausführt.

10. Computerprogrammprodukt, umfassend ein nicht-flüchtiges computerlesbares Speichermedium zum Speichern von Programmcode, der bewirkt, dass ein Computer oder ein Prozessor das Verfahren (300) nach Anspruch 8 ausführt, wenn der Programmcode durch den Computer oder den Prozessor ausgeführt wird.

## Revendications

1. Appareil de traitement d'image (100) pour générer une image de sortie (160) sur la base d'une image d'entrée (150), l'appareil de traitement d'image (100) étant configuré pour :
générer une carte de caractéristiques de contenu (114) indiquant un contenu d'image de l'image d'entrée (150), l'appareil de traitement d'image (100) comprenant un premier réseau neuronal codeur (112) configuré pour générer la carte de caractéristiques de contenu (114) indiquant le contenu d'image de l'image d'entrée (150) ;
générer un vecteur de caractéristiques de style (113) indiquant un domaine d'image de l'image d'entrée (150), l'appareil de traitement d'image (100) comprenant un deuxième réseau neuronal de codeur (111) configuré pour générer le vecteur de caractéristiques de style (113) indiquant le domaine d'image de l'image d'entrée (150) ;
déterminer un domaine d'image d'une pluralité de domaines d'image (125) sur la base du vecteur de caractéristiques de style (113) ; et
générer l'image de sortie (160) sur la base de la carte de caractéristiques de contenu (114) de l'image d'entrée (150) et d'un autre vecteur de caractéristiques de style (113') associé à un autre domaine d'image de la pluralité de domaines d'image (125),
dans lequel l'appareil de traitement d'image (100) comprend un réseau neuronal générateur (120) configuré pour générer l'image de sortie (160) sur la base de la carte de caractéristiques de contenu (114) de l'image d'entrée (150) et de l'autre vecteur de caractéristiques de style (113') associé à l'autre domaine d'image de la pluralité de domaines d'image (125), et
dans lequel le réseau neuronal générateur (120) est configuré pour, lors de la phase d'entraînement, retourner l'image de sortie (160) au premier réseau neuronal codeur (112) et au deuxième réseau neuronal codeur (111) pour entraîner l'appareil de traitement d'images (100) pour reconstruire la même carte de caractéristiques de contenu (114) et les vecteurs de caractéristiques de style (113, 113') respectifs utilisés pour l'image de sortie (160) respective,
dans lequel l'appareil de traitement d'image (100) comprend un réseau neuronal discriminateur de contenu (116), le réseau neuronal discriminateur de contenu (116) étant configuré, dans une phase d'entraînement, pour éliminer la carte de caractéristiques de contenu (114), si la carte de caractéristiques de contenu (114) contient des informations relatives au domaine d'image de l'image d'entrée (150).

2. Appareil de traitement d'image (100) selon l'une quelconque des revendications précédentes, dans lequel l'appareil de traitement d'image (100) est configuré pour déterminer le domaine d'image de la pluralité de domaines d'image (125) sur la base du vecteur de caractéristiques de style (113) en utilisant un modèle de mélange gaussien (125).

3. Appareil de traitement d'image (100) selon la revendication 2, dans lequel chacun de la pluralité de domaines d'image (125) est associé à un gaussien du modèle de mélange gaussien (125).

4. Appareil de traitement d'images (100) selon l'une quelconque des revendications précédentes, dans lequel l'appareil de traitement d'image (100) est configuré pour générer une première image de sortie (160) sur la base de la carte de caractéristiques de contenu (114) de l'image d'entrée (150) et d'un premier autre vecteur de caractéristiques de style (113') associé à un premier autre domaine d'image de la pluralité de domaines d'image (125) et une deuxième image de sortie (160) sur la base de la carte de caractéristiques de contenu (114) de l'image d'entrée (150) et d'un deuxième autre vecteur de caractéristiques de style (113') associé à un deuxième autre domaine d'image de la pluralité de domaines d'image (125).

5. Appareil de traitement d'image (100) selon la revendication 1, dans lequel l'appareil de traitement d'image (100) comprend en outre un réseau neuronal discriminateur multi-échelle (121), dans une phase d'entraînement, le réseau neuronal discriminateur multi-échelle (121) est configuré pour déterminer une information de rétroaction sur la base de l'image de sortie (160) et pour fournir l'information de rétroaction au réseau neuronal générateur (120) pour entraîner le réseau neuronal générateur (120), les informations de rétroaction comprenant des informations indiquant si l'image de sortie (160) appartient ou non à l'autre domaine d'image de la pluralité de domaines d'image (125).

6. Appareil de traitement d'image (100) selon la revendication 5, dans lequel le réseau neuronal discriminateur multi-échelle (121) comprend une pluralité de couches de regroupement moyennes pour sous-échantillonner l'image de sortie (160) vers une pluralité d'images de sortie sous-échantillonnées ayant des résolutions d'image différentes.

7. Appareil de traitement d'image (100) selon l'une quelconque des revendications précédentes, dans lequel l'appareil de traitement d'image (100) comprend un réseau neuronal configuré pour déterminer le domaine d'image de la pluralité de domaines d'image (125) associés au vecteur caractéristiques de style (113).

8. Procédé de traitement d'image (300) pour générer une image de sortie (160) sur la base d'une image d'entrée (150), dans lequel le procédé de traitement d'image (300) comprend :
la génération (301) d'une carte de caractéristiques de contenu (114) indiquant un contenu d'image de l'image d'entrée (150), la carte de caractéristiques de contenu (114) indiquant le contenu d'image de l'image d'entrée (150) étant générée par un premier réseau neuronal codeur (112) ;
la génération (303) d'un vecteur caractéristiques de style (113) indiquant un domaine d'image de l'image d'entrée (150), le vecteur caractéristiques de style (113) étant généré par un deuxième réseau neuronal codeur (111) ;
la détermination (305) d'un domaine d'image d'une pluralité de domaines d'image (125) sur la base du vecteur caractéristiques de style (113) ; et
la génération (307) de l'image de sortie (160) sur la base de la carte de caractéristiques de contenu (114) de l'image d'entrée (150) et d'un autre vecteur de caractéristiques de style (113') associé à un autre domaine d'image de la pluralité de domaines d'image (125), l'image de sortie (160) étant générée par un réseau neuronal générateur (120),
dans lequel le réseau neuronal générateur (120) est configuré pour, lors de la phase d'entraînement, retourner l'image de sortie (160) au premier réseau neuronal codeur (112) et au deuxième réseau neuronal codeur (111) pour entraîner l'appareil de traitement d'images (100) pour reconstruire la même carte de caractéristiques de contenu (114) et les vecteurs de caractéristiques de style (113, 113') respectifs utilisés pour l'image de sortie (160) respective,
dans lequel le procédé comprend en outre l'élimination, par un réseau neuronal discriminateur de contenu (116) dans une phase d'entraînement, de la carte de caractéristiques de contenu (114) si la carte de caractéristiques de contenu (114) contient des informations relatives au domaine d'image de l'image d'entrée (150).

9. Programme informatique comprenant un code de programme qui, lorsqu'il est exécuté par un ordinateur, amène l'ordinateur à réaliser le procédé selon la revendication 8.

10. Produit de programme informatique comprenant un support de stockage non transitoire lisible par ordinateur pour stocker un code de programme qui amène un ordinateur ou un processeur à réaliser le procédé (300) selon la revendication 8, lorsque le code de programme est exécuté par l'ordinateur ou le processeur.
